# EUROPÄISCHE PATENTSCHRIFT

(11) **EP 3 287 300 B1**
(45) Veröffentlichungstag und Bekanntmachung des Hinweises auf die Patenterteilung: **19.06.2019**
(21) Anmeldenummer: 17180409.9
(22) Anmeldetag: 10.07.2017
(51) Int. Cl.: B60C 9/00, D02G 3/48, B60C 9/20, B60C 9/22

(54) **FESTIGKEITSTRÄGERLAGE FÜR ELASTOMERE ERZEUGNISSE, INSBESONDERE FÜR EINE KARKASSLAGE EINES FAHRZEUGLUFTREIFENS, AUFWEISEND EINEN HYBRIDCORD**
STABILITY BEAM SUPPORT FOR ELASTOMERIC PRODUCTS, IN PARTICULAR FOR A CARCASS BEARING OF A PNEUMATIC TYRE FOR A VEHICLE, COMPRISING A HYBRID CORD
COUCHE DE RENFORT POUR LES ARTICLES ÉLASTOMÈRES, EN PARTICULIER POUR UNE NAPPE DE CARCASSE D'UN PNEU DE VÉHICULE, COMPORTANT UNE CORDE HYBRIDE

(30) Priorität: 26.08.2016 DE 102016216082
(43) Veröffentlichungstag der Anmeldung: 28.02.2018
(73) Patentinhaber: Continental Reifen Deutschland GmbH, 30165 Hannover (DE)
(72) Erfinder: Reese, Wolfgang, 31228 Peine (DE)
(74) Vertreter: Finger, Karsten

(56) Entgegenhaltungen:
- EP-A1- 2 781 633
- EP-A2- 1 745 945
- WO-A1-2012/083148

## Beschreibung

Die Erfindung betrifft eine Festigkeitsträgerlage für elastomere Erzeugnisse, insbesondere für eine Karkasslage von Fahrzeugluftreifen, wobei die Festigkeitsträger innerhalb der Lage im Wesentlichen parallel zueinander angeordnet und in elastomeres Material eigebettet sind, wobei die Festigkeitsträgerlage zumindest einen Hybridcord als Festigkeitsträger aufweist, welcher aus zumindest einem Garn aus Aramid und zumindest einem Garn aus Rayon aufgebaut ist, wobei alle Garne des Hybridcordes miteinander endverdreht sind. Eine solche gattungsgemäße Festigkeitsträgerlage ist aus der EP 2 781 633 A1 bekannt. Weiter betrifft die Erfindung einen Fahrzeugluftreifen aufweisend eine solche Festigkeitsträgerlage.

Festigkeitsträger zur Verstärkung verschiedener elastomerer Erzeugnisse, insbesondere für die Karkasse und/oder die Gürtelbandage von Fahrzeugluftreifen, sind dem Fachmann in Aufbau und Werkstoff in verschiedensten Ausführungen bekannt. Die Festigkeitsträger werden, beispielsweise durch Kalandrieren, in eine Kautschukmischung eingebettet, um als gummierte Festigkeitsträgerlage im Elastomerprodukt eingesetzt werden zu können.

Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist. Die Gürtelbandage kann ein- oder mehrlagig ausgebildet sein und deckt zumindest die Gürtelränder ab. Die Gürtelbandage enthält üblicherweise parallel und im Wesentlichen in Umfangsrichtung verlaufende Festigkeitsträger in Form von Hybridcorden, die in Gummi eingebettet sind.

In PKW-Radialreifen verlaufen die Festigkeitsträger der meist einlagigen Karkasse in radialer Richtung. Die Festigkeitsträger einer Festigkeitsträgerlage der Karkasse müssen eine ausreichende Festigkeit aufweisen, um die im Betrieb des Reifens auftretenden Kräfte hinreichend aufnehmen zu können und dauerhaltbar zu sein. Insbesondere leistet die Karkasse Widerstand gegen den Innendruck des Reifens und hat die Funktion eines Festigkeitsträgers. Der radiale Verlauf der Festigkeitsträger erhöht die Festigkeitseigenschaften der Lage und verbessert die Tragfähigkeit und die Komfortmerkmale des Reifens wie Einfederung und Fahrverhalten. Das Fahrverhalten wird, insbesondere im Hochgeschwindigkeitseinsatz, durch einen hohen Elastizitätsmodul bei Dehnungen bis ca. 2 % bis 4 % der Festigkeitsträger der Karkasse zusätzlich positiv beeinflusst. Zusätzlich sollen die VerstärkungsHybridcorde eine hohe Bruchkraft und eine hohe Bruchdehnung aufweisen, um die Dauerhaltbarkeit des Reifens zu erhöhen und eine verbesserte Haltbarkeit bezüglich Schlagbeanspruchung, wie sie beispielsweise beim Durchfahren eines Schlagloches auftreten kann, aufzuweisen.

Die "Bruchkraft" ist ein in der Werkstoffprüfung verwendeter Begriff für die Kraft, die benötigt wird, um einen Prüfkörper zu brechen oder zu zerreißen. Die "Bruchdehnung" ist ein in der Werkstoffprüfung verwendeter Begriff für die Dehnung bei Bruchkraft. Die Bruchdehnung wird meist in % angegeben. Die Bruchdehnung und die Bruchkraft sind gemessen nach ASTM D885M.

Ein "Garn" ist im Rahmen der vorliegenden Erfindung in Anlehnung an die DIN 60900 ein linienförmiges Gebilde, das aus einzelnen Filamenten oder Fasern besteht, welche miteinander verdreht sind. Im Rahmen der vorliegenden Erfindung stellen "Hybridcorde" linienförmige Gebilde dar, die aus zwei oder mehr miteinander endverdrehten Garnen bestehen. Ein "Hybridcord" stellt einen Hybridcord dar, der zumindest zwei unterschiedliche Garne aufweist. Ein Garn aus einem Material ist ganz oder teilweise aus diesem Material gebildet.

Bekannt sind beispielsweise Festigkeitsträger für die Karkasslage von Reifen aus Rayon. An Karkasslagen mit Festigkeitsträgern aus Rayon ist aber nachteilig, dass Rayon feuchtigkeitsempfindlich ist und sich durch Feuchtigkeitsaufnahme die Bruchkraft verringert. Zudem ist Rayon in seiner Anschaffung kostenintensiv.

Bekannt sind Hybridcorde, die Garne mit unterschiedlichen Eigenschaften aufweisen, wobei die Garne miteinander endverdreht sind. Hierdurch können die Eigenschaften der Garne miteinander kombiniert werden. Zudem sind die Garne durch die Vertwistung auf eine helikale Bahn gebracht, wodurch den Garnen des Hybridcordes eine geometrische Dehnung ermöglicht ist.

Als Festigkeitsträger für die Karkasse sind schon unterschiedlichste Hybridcorde vorgeschlagen worden. So wird beispielsweise in der EP 2 065 225 B1 als Festigkeitsträger für die Karkasslage ein Hybridcord vorgeschlagen, der zwei Garne aus Aramid und ein Garn aus Rayon aufweist, wobei die Garne miteinander endverdreht sind. Zudem ist offenbart, dass die Garne aus Aramid Garne aus para-Aramid sein können. Garne aus para-Aramid zeichnen sich durch eine für den Einsatz in der Karkasse vorteilhafte vergleichsweise hohe Bruchkraft aus und weisen einen vergleichsweise hohen Elastizitätsmodul auf, was vorteilhaft für das Fahrverhalten, insbesondere im Hochgeschwindigkeitseinsatz, ist. Nachteilig ist aber an Garnen aus para-Aramid, dass deren Bruchdehnung gering ist Weiterhin sind Hybrid-Reifencords mit Garnen aus Aramid und Rayon sowie aus Meta-Aramid und Rayon aus EP 1 745 945 A2 beziehungsweise WO 2012 083 148 A1 bekannt.

Der vorliegenden Erfindung liegt die Aufgabe zu Grunde, eine Festigkeitsträgerlage für elastomere Erzeugnisse, insbesondere eine Karkasslage von Fahrzeugluftreifen, bereitzustellen, welche eine erhöhte Haltbarkeit bei Schlagbeanspruchung aufweist.

Die Aufgabe wird gelöst, indem das Garn aus Aramid ein Garn aus meta-Aramid ist und indem das Garn aus meta-Aramid eine Bruchdehnung von zumindest 20% aufweist.

Ein solcher Hybridcord weist eine stark erhöhte Bruchdehnung auf. Das Garn aus meta-Aramid zeichnet sich durch eine vergleichsweise hohe Bruchdehnung von mindestens 20% aus, insbesondere zeichnet es sich durch eine höhere Bruchdehnung als ein Garn aus para-Aramid oder Rayon vergleichbarer Feinheit aus. Hierdurch ist ein Hybridcord mit einer erhöhten Bruchdehnung zur Verfügung gestellt. Eine Festigkeitsträgerlage aufweisend einen solchen Hybridcord ist somit unanfälliger gegenüber aufgezwungener starker Dehnung, wie sie z.B. bei einer Karkasslage im Reifen beim Durchfahren eines Schlagloches auftritt.

Aramide sind aromatische Polyamide, in deren Makromolekülen nach Definition der amerikanischen Federal Trade Commission mindestens 85 % der Amid-Gruppen direkt an zwei aromatische Ringe gebunden sind. Aramide sind Polymerisate, die auf zumindest den Monomeren Terephthaloyldichlorid (TDC) und monomeren Aminen basieren. Beispielsweise sind para-Aramide Polymerisate, die auf den Monomeren TDC und para-Phenylendiamin (PPD) basieren und meta-Aramide sind Polymerisate, die auf den Monomeren TDC sowie meta-Phenylendiamin basieren.

Als Garne aus meta-Aramid werden beispielsweise die von der Firma DuPont unter dem Handelsnamen Nomex® vertrieben Produkte genannt.

In einem Kraft-Dehnungsdiagramm weisen die nachfolgend aufgezählten Werkstoffe eine von niedrig zu hoher Bruchdehnung steigende Werte auf: para-Aramid, Rayon, meta-Aramid.

Durch die Verdrehung zumindest eines Garns aus meta-Aramid mit zumindest einem Garn aus Rayon werden vorteilhafte Eigenschaften beider Garne im Hybridcord kombiniert. Durch die erhöhte Bruchdehnung ist die Haltbarkeit bei Schlagbeanspruchung eines Reifens, wie sie z.B. bei der Durchfahrt eines Reifens durch ein Schlagloch erfolgt, verbessert.

Gleichzeitig bleiben positive Eigenschaften wie ein positives Fahrverhalten, ein geeigneter Elastizitätsmodul bei Dehnungen von 2% bis 4% sowie ein geringer Schrumpf erhalten.

Zweckmäßig ist es, wenn alle Fasern und / oder alle Filamente des Garns aus meta-Aramid aus meta-Aramid bestehen. Zweckmäßig ist es auch, wenn alle Fasern und / oder alle Filamente des Garns aus Rayon bestehen.

In einer vorteilhaften Ausführungsform weist das Garn aus meta-Aramid eine Bruchdehnung von 20 % bis 35 %, bevorzugt eine Bruchdehnung von 25 % bis 30 %, auf. Hierdurch ist ein Hybridcord mit einer besonders vorteilhaften Bruchdehnung zur Verfügung gestellt.

Die vorteilhaften Eigenschaften der Festigkeitsträgerlage aufweisend einen solchen Hybridcord ergeben sich bei besonders einfacher Konstruktion des Hybridcordes, wenn der Hybridcord genau zwei Garne aufweist, wobei das erste Garn ein Garn aus meta-Aramid und das zweite Garn ein Garn aus Rayon ist.

Zweckmäßig ist es, wenn der Festigkeitsträger einer Karkasslage durch einen Hybridcord der Konstruktion meta-Aramid 1780x1 + Rayon 2440x1 gegeben ist. Hierbei ist ein Garn aus meta-Aramid der Feinheit 1780 dtex mit einem Garn aus Rayon der Feinheit 2440 dtex zum Hybridcord endverdreht.

Der Hybridcord kann durch gezielte Auswahl der Garne definiert in seinen Eigenschaften eingestellt sein. Als vorteilhaft für den Einsatz als Festigkeitsträger einer Karkasslage hat es sich erwiesen, wenn alle Garne des Hybridcordes eine Feinheit von 500 dtex bis 3500 dtex aufweisen. Zweckmäßig ist es auch, wenn das Garn aus meta-Aramid eine Feinheit von 500-3500 dtex aufweist und/oder wenn das Garn aus Rayon eine Feinheit von 500-3500 dtex aufweist.

Es ist zweckmäßig, die Oberfläche des Hybridcordes zur Gewährleistung der Haftung zwischen Hybridcord und Haftimprägnierung oder Hybridcord und elastomerem Material mechanisch, physikalisch und/oder chemisch zu aktivieren.

Um eine zuverlässige Haftung des Hybridcords zum elastomeren Material zu gewährleisten, ist es vorteilhaft, die Garne und/oder den Hybridcord zusätzlich mit einer Haftimprägnierung, z.B. mit einem RFL-Dip im 1- oder 2-Bad-Verfahren, zu versehen.

Zweckmäßig ist es, wenn alle Festigkeitsträger einer Festigkeitsträgerlage solche Hybridcorde sind.

Vorteilhaft ist es, wenn es sich um eine Festigkeitsträgerlage für einen Fahrzeugluftreifen handelt. Eine solche Festigkeitsträgerlage eignet sich aber auch hervorragend als Festigkeitsträgerlage für weitere elastomere Erzeugnisse, wie Fördergurte, Antriebsriemen, Schläuche und Luftfederbälge.

Die Erfindung betrifft weiter einen Fahrzeugluftreifen aufweisend eine solche Festigkeitsträgerlage. Hierbei kann es sich um eine Festigkeitsträgerlage der Karkasse und / oder um eine Festigkeitsträgerlage der Gürtelbandage handeln. Die Hybridcorde können dabei als Festigkeitsträger von Festigkeitsträgerlagen für Reifen für Personenkraftwagen, für Van, für Light-Trucks, für Krafträder als auch für Nutzfahrzeuge eingesetzt werden. Ein Fahrzeugluftreifen mit einer solchen Karkasslage zeichnet sich durch eine erhöhte Haltbarkeit aus.

Weitere Merkmale, Vorteile und Einzelheiten der Erfindung werden nun anhand der Figuren, die schematische Ausführungsbeispiele darstellen, näher beschrieben. Dabei zeigen die:
Fig. 1 einen radialen Querschnitt durch einen erfindungsgemäßen Fahrzeugluftreifen;
Fig. 2 einen Hybridcord als Festigkeitsträger einer Festigkeitsträgerlage gemäß der Erfindung.

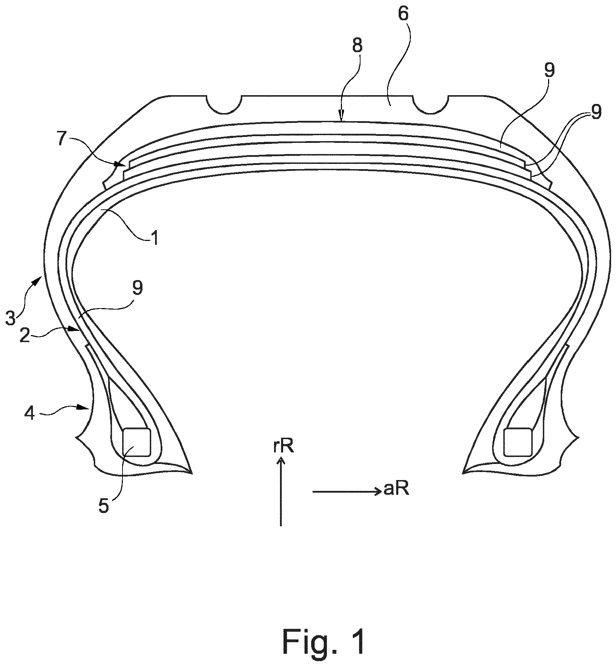

Die Figur 1 zeigt einen radialen Querschnitt durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine hier eine Festigkeitsträgerlage 9 aufweisende Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial außerhalb der Karkasse befindlichen profilierten Laufstreifen 6 und einen zwischen dem Laufstreifen 6 und der Karkasse 2 angeordneten, zwei Festigkeitsträgerlagen 9 beinhaltenden Gürtel 7, welcher radial außen mit der Gürtelbandage 8 abgedeckt ist, welche hier eine Festigkeitsträgerlage 10 umfasst.

Bei Fahrzeugluftreifen in wie in Fig. 1 gezeigter radialer Bauart sind die Festigkeitsträger der Karkasslage 9 der Karkasse 2 in etwa parallel zueinander in etwa in radialer Richtung angeordnet. Der Gürtel 7 weist zwei weitgehend übereinander angeordnete Festigkeitsträgerlagen 9 auf, wobei die Festigkeitsträger in den einzelnen Lagen jeweils in etwa parallel zueinander ausgerichtet sind. Die Erstreckungsrichtung der Festigkeitsträger in den zwei Festigkeitsträgerlagen 9 verlaufen in der einen Lage in spitzem Winkel zum Reifenumfang in der einen Richtung steigend, in der anderen Lage in spitzem Winkel zum Reifenumfang in der anderen Richtung steigend. Die Festigkeitsträgerlage 9 der Gürtelbandage 8 beinhaltet einen oder mehrere Festigkeitsträger, der oder die kontinuierlich entlang der axialen Breite gewickelt ist oder sind.

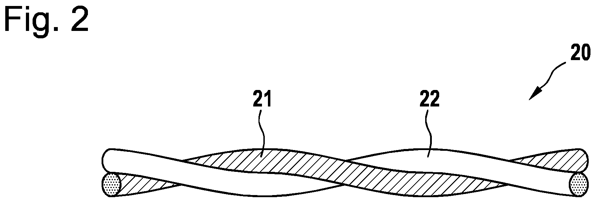

Figur 2 zeigt einen Hybridcord 20 für eine Festigkeitsträgerlage gemäß der Erfindung für elastomere Erzeugnisse, insbesondere für eine Karkassfestigkeitsträgerlage. Der Hybridcord 20 besteht aus einem Garn 21 aus meta-Aramid der Feinheit 1780 dtex und einem Garn (22) aus Rayon der Feinheit 2440 dtex. Das Garn 21 ist dabei ganz aus meta-Aramid gebildet und das Garn 22 ist dabei ganz aus Rayon gebildet. Der Hybridcord 20 ist mit einer RFL Haftimprägnierung versehen. Das Garn 21 aus meta-Aramid weist eine Bruchdehnung von ca. 27% auf. Es handelt sich insbesondere um einen Hybridcord 20 für eine Karkasslage eines PKW Reifens radialer Bauart. Insbesondere handelt es sich dabei um einen PKW Reifen wie in Fig. 1 gezeigt.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Festigkeitsträgerlage
- rR: radiale Richtung
- aR: axiale Richtung
- 20: Hybridcord
- 21: Garn aus meta-Aramid
- 22: Garn aus Rayon

## Patentansprüche

1. Festigkeitsträgerlage (9) für elastomere Erzeugnisse, insbesondere für eine Karkasslage von Fahrzeugluftreifen, wobei die Festigkeitsträger innerhalb der Lage (9) im Wesentlichen parallel zueinander angeordnet und in elastomeres Material eigebettet sind, wobei die Festigkeitsträgerlage (9) zumindest einen Hybridcord als Festigkeitsträger aufweist, welcher aus zumindest einem Garn (21) aus Aramid und zumindest einem Garn (22) aus Rayon aufgebaut ist, wobei alle Garne (21) (22) des Hybridcordes (20) miteinander endverdreht sind,
**dadurch gekennzeichnet, dass**
das Garn (21) aus Aramid ein Garn (21) aus meta-Aramid ist und dass das Garn (21) aus meta-Aramid eine Bruchdehnung von zumindest 20% aufweist.

2. Festigkeitsträgerlage (9) nach Anspruch 1, **dadurch gekennzeichnet, dass** das Garn (21) aus meta-Aramid eine Bruchdehnung von 20 % bis 35 %, bevorzugt eine Bruchdehnung von 25 % bis 30 %, aufweist.

3. Festigkeitsträgerlage (9) nach zumindest einem der vorangehenden Ansprüche,
**dadurch gekennzeichnet, dass** der Hybridcord (20) aus genau zwei Garnen gebildet ist, wobei das erste Garn ein Garn (21) aus meta-Aramid und das zweite Garn ein Garn (22) aus Rayon ist.

4. Festigkeitsträgerlage (9) nach zumindest einem der vorangehenden Ansprüche,
**dadurch gekennzeichnet, dass** das Garn (21) aus meta-Aramid eine Feinheit von 500 dtex bis 3500 dtex aufweist.

5. Festigkeitsträgerlage (9) nach zumindest einem der vorangehenden Ansprüche,
**dadurch gekennzeichnet, dass** das Garn (22) aus Rayon eine Feinheit von 500 dtex bis 3500 dtex aufweist.

6. Festigkeitsträgerlage (9) nach zumindest einem der vorangehenden Ansprüche,
**dadurch gekennzeichnet, dass** der Hybridcord (20) die Konstruktion meta-Aramid 1780x1 + Rayon 2440x1 aufweist.

7. Festigkeitsträgerlage (9) nach zumindest einem der vorangehenden Ansprüche,
**dadurch gekennzeichnet, dass** der Hybridcord (20) mit einer Haftimprägnierung zur Gewährleistung der Haftung des Hybridcordes (20) zum elastomeren Material versehen ist.

8. Festigkeitsträgerlage (9) nach zumindest einem der vorangehenden Ansprüche,
**dadurch gekennzeichnet, dass** es sich um eine Festigkeitsträgerlage (9) für einen Fahrzeugluftreifen handelt.

9. Fahrzeugluftreifen enthaltend eine Festigkeitsträgerlage (9) gemäß zumindest einem der Ansprüche 1 bis 8.

10. Fahrzeugluftreifen nach Anspruch 9, **dadurch gekennzeichnet, dass** die Festigkeitsträgerlage (9) eine Festigkeitsträgerlage der Karkasse (2) und / oder der Gürtelbandage (8) ist.

## Claims

1. Strength member ply (9) for elastomeric articles, in particular for a carcass ply of pneumatic vehicle tyres, wherein within the ply (9) the strength members are arranged substantially parallel to one another and are embedded in elastomeric material, wherein the strength member ply (9) comprises at least one hybrid cord as a strength member which is constructed from at least one yarn (21) of aramid and at least one yarn (22) of rayon, wherein all yarns (21) (22) of the hybrid cord (20 are end-twisted with one another,
**characterized in that**
the yarn (21) of aramid is a yarn (21) of meta-aramid and that the yarn (21) of meta-aramid has a breaking elongation of at least 20%.

2. Strength member ply (9) according to Claim 1,
**characterized in that** the yarn (21) of meta-aramid has a breaking elongation of 20% to 35%, preferably a breaking elongation of 25% to 30%.

3. Strength member ply (9) according to at least one of the preceding claims, **characterized in that** the hybrid cord (20) is formed from precisely two yarns, wherein the first yarn is a yarn (21) of meta-aramid and the second yarn is a yarn (22) of rayon.

4. Strength member ply (9) according to at least one of the preceding claims, **characterized in that** the yarn (21) of meta-aramid has a fineness of 500 dtex to 3500 dtex.

5. Strength member ply (9) according to at least one of the preceding claims, **characterized in that** the yarn (22) of rayon has a fineness of 500 dtex to 3500 dtex.

6. Strength member ply (9) according to at least one of the preceding claims, **characterized in that** the hybrid cord (20) has the construction meta-aramid 1780x1 + rayon 2440x1.

7. Strength member ply (9) according to at least one of the preceding claims, **characterized in that** the hybrid cord (20) is provided with an adhesive impregnation to ensure adhesion of the hybrid cord (20) to the elastomeric material.

8. Strength member ply (9) according to at least one of the preceding claims, **characterized in that** a strength member ply (9) for a pneumatic vehicle tyre is concerned.

9. Pneumatic vehicle tyre containing a strength member ply (9) according to at least one of Claims 1 to 8.

10. Pneumatic vehicle tyre according to Claim 9,
**characterized in that** the strength member ply (9) is a strength member ply of the carcass (2) and/or of the belt bandage (8).

## Revendications

1. Couche de renfort (9) pour produits élastomères, notamment pour une couche de carcasse de pneu de véhicule, les renforts étant agencés dans la couche (9) essentiellement en parallèle les uns des autres et étant incorporés dans un matériau élastomère, la couche de renfort (9) comprenant au moins un câble hybride en tant que renfort, qui est formé par au moins un fil (21) en aramide et au moins un fil (22) en rayonne, tous les fils (21) (22) du câble hybride (20) étant vrillés aux extrémités les uns avec les autres,
**caractérisée en ce que**
le fil (21) en aramide est un fil (21) en méta-aramide et **en ce que** le fil (21) en méta-aramide présente un allongement à la rupture d'au moins 20 %.

2. Couche de renfort (9) selon la revendication 1,
**caractérisée en ce que** le fil (21) en méta-aramide présente un allongement à la rupture de 20 % à 35 %, de préférence un allongement à la rupture de 25 % à 30 %.

3. Couche de renfort (9) selon au moins l'une quelconque des revendications précédentes, **caractérisée en ce que** le câble hybride (20) est formé par exactement deux fils, le premier fil étant un fil (21) en méta-aramide et le deuxième fil étant un fil (22) en rayonne.

4. Couche de renfort (9) selon au moins l'une quelconque des revendications précédentes, **caractérisée en ce que** le fil (21) en méta-aramide présente un titre de 500 dtex à 3 500 dtex.

5. Couche de renfort (9) selon au moins l'une quelconque des revendications précédentes, **caractérisée en ce que** le fil (22) en rayonne présente un titre de 500 dtex à 3 500 dtex.

6. Couche de renfort (9) selon au moins l'une quelconque des revendications précédentes, **caractérisée en ce que** le câble hybride (20) présente la construction méta-aramide 1780x1 + rayonne 2440x1.

7. Couche de renfort (9) selon au moins l'une quelconque des revendications précédentes, **caractérisée en ce que** le câble hybride (20) est muni d'une imprégnation adhésive pour assurer l'adhésion du câble hybride (20) au matériau élastomère.

8. Couche de renfort (9) selon au moins l'une quelconque des revendications précédentes, **caractérisée en ce qu'**il s'agit d'une couche de renfort (9) pour un pneu de véhicule.

9. Pneu de véhicule contenant une couche de renfort (9) selon au moins l'une quelconque des revendications 1 à 8.

10. Pneu de véhicule selon la revendication 9,
**caractérisé en ce que** la couche de renfort (9) est une couche de renfort de la carcasse (2) et/ou du bandage de ceinture (8).
